# EUROPEAN PATENT SPECIFICATION

(11) **EP 1 781 463 B1**
(45) Date of publication and mention of the grant of the patent: **04.08.2010**
(21) Application number: 05770284.7
(22) Date of filing: 10.08.2005
(51) Int. Cl.: B32B 3/30, B29C 45/14

(54) **TRANSFER FILM, ITS USE AND PROCESS FOR THE PRODUCTION OF DECORATED PLASTIC ARTICLES**
TRANSFERFOLIE, IHRE VERWENDUNG UND VERFAHREN FÜR DIE HERSTELLUNG VON VERZIERTEN KUNSTSTOFFARTIKELN
FILM DE TRANSFERT, SON UTILISATION ET PROCEDE DE FABRICATION D'ARTICLES EN PLASTIQUE DECORE

(30) Priority: 27.08.2004 DE 102004041868
(43) Date of publication of application: 09.05.2007
(73) Proprietor: Leonhard Kurz Stiftung & Co. KG, 90763 Fürth (DE)
(72) Inventor: HIRSCHFELDER, Andreas, 90766 Fürth (DE); REUTHER, Uwe, 90482 Nürnberg (DE)
(74) Representative: LOUIS, PÖHLAU, LOHRENTZ
(86) International application number: PCT/EP2005/008667
(87) International publication number: WO 2006/021321

(56) References cited:
- US-A- 4 414 731
- PATENT ABSTRACTS OF JAPAN vol. 012, no. 170 (P-705), 20 May 1988 (1988-05-20) & JP 62 280884 A (NISSHA PRINTING CO LTD), 5 December 1987 (1987-12-05)
- PATENT ABSTRACTS OF JAPAN vol. 012, no. 163 (P-703), 18 May 1988 (1988-05-18) & JP 62 276580 A (NISSHA PRINTING CO LTD), 1 December 1987 (1987-12-01)

## Description

The invention relates to a transfer film comprising a carrier film having a first side and a second side, a release layer being arranged on the first side of the carrier film and a transfer layer being arranged on the side of the release layer facing away from the carrier film, and to its use. The invention also relates to two processes for the production of a plastic article which is decorated with a transfer layer of a transfer film and which has three-dimensional structuring in the region of the transfer layer, using such a transfer film.

Transfer films of the type mentioned above and suitable processes for the decoration of plastic articles with a transfer layer, three-dimensional structuring being produced in the region of the transfer layer, are known.

For example, JP 2002264268 A discloses what is known as an in-mold process for the production of an injection molded article decorated with a decorative film, having three-dimensional structuring in the region of the decorative film. In this case, an unstructured decorative film is arranged in an injection mold, of which the surface is structured. After the injection mold has been closed, according to figure 2 of JP 2002264268 A the decorative film has a plastic injection molding compound injected behind it, the decorative film being forced against the structured wall of the injection mold. In the process, structuring of the layer of the decorative film that faces the wall and which has thermoplastic properties and a glass transition temperature of 130°C or less takes place. As a result of the contact between the hot injection molding compound and the decorative film, the thermoplastic layer softens and is shaped in accordance with the structuring of the injection mold.

With the process disclosed in JP 2002264268 A, differently configured structuring of the injection molded article can be achieved only if a further injection mold with changed structuring of the inner wall is provided. In addition, unstructured injection molded articles cannot be produced by using the structured injection mold. Since the production of an injection molding tool and the structuring thereof are generally costly and time-consuming, undesirably high costs and regular machine stoppages arise in the event of a change in the decorative structuring according to the process of JP 2002264268 A, even if the general shape of the injection molded article is intended to be maintained.

It is, then, an object of the invention to provide a transfer film for the decoration of a plastic article which has three-dimensional structuring in the region of the transfer layer which permits faster and more cost-effective changing of be three-dimensional structuring. Furthermore, two cost-effective processes are to be provided for the decoration of a plastic article with a transfer layer which has three-dimensional structuring in the region of the transfer layer, which processes permit faster and more cost-effective changing of the three-dimensional structuring by using the transfer film according to the invention.

For the transfer film which comprises a carrier film having a first side and a second side, a release layer being arranged on the first side of the carrier film and a transfer layer being arranged on the side of the release layer facing away from the carrier film, the object is achieved in that, either on the second side of the carrier film or on the side of the transfer film opposite the second side of the carrier film there is partially arranged a structured layer with a layer thickness of at least approximately 9 µm of a structuring varnish, whose compressive strength is substantially constant at least up to a temperature of 200°C.

If such a transfer film is used in an in-mold injection molding process or during hot pressing, the structured layer is not deformed or deformed only insignificantly, since injection molding compounds are normally injected at temperatures below 200 to 300°C into molds having a temperature of about 30 to 70°C, and hot embossing is only likewise carried out below 270°C. The use of the transfer film according to the invention for the in-mold injection or hot pressing permits the formation of three-dimensional structures in the region of the transfer layer on a plastic article decorated with one such, it being possible for a three-dimensional positive or negative image of the structured layer to be produced on the plastic article and on the transfer layer connected thereto, depending on the arrangement of the structured layer.

In this case, the structured layer can be produced on the carrier film in a simple and cost-effective manner in the required thickness by a printing process such as gravure printing, pad printing or screen printing. The formation of the structured layer by means of screen printing is preferred in this case, since particularly high layer thicknesses can be formed therewith. Here, flat screens or rotary screens can be used. The screen material should permit a maximum application of the structured layer for the desired printed image. To this end, stainless steel fabrics with a fineness of, for example, 110 threads per cm are preferably used. Depending on the desired printing resolution, this value can be reduced further, which leads to a further increase in the layer thickness that can be achieved.

In the event of a change in the decoration of the three-dimensional structuring of a plastic article decorated with the transfer layer of the transfer film according to the invention, the necessary steps are accordingly restricted to the provision of a changed printing original for the structured layer. If no more three-dimensional structuring is desired, the application of the structured layer can be dispensed with and a decorative plastic article with a smooth surface can immediately be fabricated in the injection molding tool previously used. Neither the transfer layer used nor the apparatus used hitherto, such as injection molds or embossing rolls, needs to be changed. This minimizes the costs and the changeover times in the event of a change in the decoration. How the process of forming three-dimensional structuring by using the transfer film according to the invention is carried out in detail is explained in the following text in relation to the process according to the invention.

For a first process for the production of an injection molded article decorated with a transfer layer of a transfer of film, which has three-dimensional structuring in the region of the transfer layer, the object is achieved by the following steps:
- arranging the transfer film according to the invention in an injection mold in such a way that the transfer film rests on an inner wall of the injection mold,
- injecting a plastic injection molding compound behind the transfer film,
- curing the plastic injection molding compound to form a first plastic material,
- removing the first plastic material, including the transfer of film firmly connected thereto, from .the injection mold, and
- pulling the carrier film off the transfer layer of the transfer film.

As the injection mold, which has no kind of structuring on its inner wall, is filled with plastic injection molding compound, in the case in which the structured layer is arranged directly on the transfer film, the structured layer and, at the same time, the regions of the carrier film free of the structured layer are forced against the normally rigid inner wall of and injection mold. In the regions free of the structured layer, the carrier film runs along the inner wall of the injection mold and, in the regions in which there is a structured layer, leads away from the inner wall of the injection mold or is spaced apart from the inner wall of the injection mold by the structured layer. The decorated injection molded article formed has three-dimensional structuring which can be detected by touch in the region of the transfer layer.

If a transfer film is used whose structured layer is arranged on the side of the transfer film opposite the carrier film, the structured layer produces either three-dimensional structuring which is only visible but cannot be detected by touch, by means of the structuring varnish itself, that is to say on the side of the transfer layer which faces away from the observer and which is filled by the injection molding compound, or structuring in the region of the transfer layer which can be detected by touch.
If the inner wall of the injection mold is formed in such a way, for example by means of elastic inlays, that it can be deformed under injection molding conditions, then structuring which can be detected by touch is produced, since regions with structuring varnish effect more intense deformation of the inner wall of the injection mold than regions without structuring varnish. In this case, elastic inlays can be formed of silicone, for example. If, on the other hand, the inner wall of the injection mold is formed in such a way that it cannot be deformed under injection molding conditions, then structuring which is merely visible is produced, since no deformation of the inner wall of the injection mold takes place and thus the regions between the structuring varnish regions are merely filled without the transfer layer being deformed in the process. The surface of the transfer layer and of the injection molded article decorated therewith remains smooth in this case.

It has proven to be advantageous if the plastic injection molding compound is formed of ABS, an ABS/PC mixture, PC, PA, SAN, ASA, TPO, PMMA, PP or a mixture of at least two of these materials, if these are compatible with each other. Plastic materials of this type can be processed reliably on injection molding machines.

For a second process for the production of a thermoplastic article which is decorated with a transfer layer of a transfer film by means of hot embossing and which has three-dimensional structuring in the region of the transfer layer, the object is achieved by the following steps:
- arranging the transfer film according to the invention on the plastic article in such a way that the transfer film faces away from the plastic article,
- hot embossing the transfer film onto the plastic article, and
- pulling the carrier film off the transfer layer of the transfer film.

For an embossing tool and an opposing pressure surface, between which the transfer film and the thermoplastic article are led during hot embossing, different materials can be used, depending on the application. For example, on the one hand an embossing tool, for example an embossing roll, can be rigid and an opposing pressure surface to the embossing tool, for example likewise a roll, can be elastic, or else the opposing pressure surface can be rigid and the embossing tool elastic, or both the embossing tool and the opposing pressure surface can be rigid or elastic.

In this case, the elasticity should be designed experimentally, matching the application-specific pressure conditions. Here, neither the embossing tool nor the opposing pressure surface has a surface structure; instead both are designed to be smooth on their contact surfaces with respect to the transfer film and with respect to the thermoplastic article. However, the material selection must be made such that an adequate heat transfer to the transfer film and the plastic article is ensured during hot embossing. The following exemplary embodiments assume that, during hot embossing, the embossing tool is in contact with the transfer film, while the opposing pressure surface is in contact with the thermoplastic article. However, this is not absolutely necessary and is intended here to serve only to illustrate the effects that can be achieved.
If a rigid, for example metallic, embossing tool is pressed against the transfer film, the plastic article and a rigid, for example likewise metallic, opposing pressure surface, in the case in which the structured layer is arranged directly on the transfer film, the structured layer and, at the same time, also the regions of the carrier film free of the structured layer are pressed against the smooth surface of the embossing tool. Accordingly, in the regions free of the structured layer, the carrier film runs along the surface of the embossing tool and, in the regions in which the structured layer is present, is led away from the surface of the embossing tool or spaced apart from the surface of the embossing tool by the structured layer. The decorated plastic article formed has three-dimensional structuring that can be detected by touch in the region of the transfer layer.

If a rigid, for example metallic, embossing tool is pressed against the transfer film, the plastic article and an elastic opposing pressure surface, for example silicone, in the case in which the structured layer is arranged directly on the carrier film, the structured layer and, at the same time, also the regions of the carrier film free of the structured layer are pressed against the smooth surface of the embossing tool. Accordingly, in regions free of then structured layer, the carrier film runs along the surface of the embossing tool and, in the regions in which the structured layer is present, is led away from the surface of the embossing tool or spaced apart from the surface of the embossing tool by the structured layer, the adjacent region of the plastic article being pressed into the elastic opposing pressure surface and the latter being deformed. The decorated plastic article formed has three-dimensional structuring that can be detected by touch in the region of the undecorated surface of the plastic article opposite the transfer layer and in the region of the transfer layer.

If, then, a transfer film is used whose structured layer is arranged on the side of the transfer film opposite the carrier film, the structured layer produces either three-dimensional structuring that is merely visible but cannot be detected by touch or three-dimensional structuring which can be detected by touch.

If a rigid embossing tool is pressed against the transfer film, the plastic article and a rigid opposing pressure surface, the structured layer arranged directly on the transfer layer is pressed into the thermoplastic article. The decorated plastic article formed has structuring which is merely visible in the region of the structuring layer and which results on the waviness of the surface of the thermoplastic article which adjoins the transfer layer. This surface must accordingly be visible either from the transfer layer or from the surface of the plastic article opposite the transfer layer.

If a rigid embossing tool is pressed against the transfer film, the plastic article and an elastic opposing pressure surface, the structured layer being arranged directly on the transfer layer, the structured layer is pressed in the direction of the elastic opposing pressure surface and deforms the latter. The decorated plastic article formed has three-dimensional structuring which can be detected by touch in the region of the free surface of the plastic article opposite the transfer layer.

If an elastic embossing tool is pressed against the transfer film, the plastic article and a rigid opposing pressure surface, the structured layer being arranged directly on the transfer layer, the structured layer is pressed in the direction of the elastic embossing tool and deforms the latter. The decorated plastic article formed has three-dimensional structuring that can be detected by touch in the region of the surface of the plastic article covered by the transfer layer.

If an elastic embossing tool is pressed against the transfer film, the plastic article and an elastic opposing pressure surface, the structured layer being arranged directly on the transfer layer, the structured layer leads both to deformation of the elastic embossing tool and of the elastic opposing pressure surface. In this case, an elastic material should be used for the embossing tool and/or the opposing pressure surface which is capable of transmitting the quantity of heat required for hot embossing to the thermoplastic article and the transfer film. The decorated plastic article has in each case three-dimensional structuring that can be detected by touch in the region of the surface of the plastic article covered by the transfer layer and also in the surface opposite the transfer layer, but structure depth is naturally lower by at least a half with regard to the aforementioned procedures.

For the depth of the three-dimensional structuring that can be produced, in general the layer thickness of the structured layer is critical for the process according to the invention. In order to achieve three-dimensional structuring that can be detected by touch, a structured layer with at least 20 µm thickness is required, which cannot be deformed or can be deformed only little under the processing conditions for the transfer film. Of course, the thickness of the structured layer on a carrier film can be formed differently in this case, so that three-dimensional structures of different depths can be produced simultaneously.

It has proven particularly worthwhile if the structuring varnish has a thermosetting plastic or a thermoplastic with a glass transition temperature T_{g} above 200°C. However, the use of a structuring varnish made of a non cross-linked varnish system filled with a filler, the filler preferably being formed of inorganic fillers such as titanium dioxide, has proven worthwhile. Structuring varnishes of this type are dimensionally stable and pressure-resistant up to high temperatures, so that deformation of the structured layer under injection molding conditions does not take place or takes place only to an extremely low extent.

Here, it has proven particularly worthwhile if the structuring vanish is a radiation-curable, ESH-curable, epoxy-curable, isocyanate-curable or acid-curable varnish. Such crosslinking varnishes exhibit the required dimensional and pressure stability at high processing temperatures and can also be processed easily with a high solids content.

It is particularly preferred in this case if the structuring varnish has a solids content of at least 40%, preferably of 100%. The high solids content increases the achievable layer thickness of the structured layer and improves the transcription capability of the structured payer. Thus, the achievable depth of the three-dimensional structures is increased.

If the structured layer is arranged on the second side of the carrier film, it has proven to be advantageous if the structuring vanish is colored differently from the carrier film. This permits visual checking of the structured layer, for example with regard to its completeness, and simpler and more accurate, also automatic, positioning of the transfer of film in the selected processing method.

If the structured layer is arranged on the side of the transfer film arranged opposite the second side of the carrier film, the structuring varnish can be both colorless or colored. Whether coloration is desired of course also depends on whether the transfer layer used enables a view at all of the structured layer remaining between plastic article and transfer layer.

The structured layer is preferably formed on the carrier film in the form of a regular or irregular pattern and/or in the form of alphanumeric characters and/or in the form of pictorial illustrations. The design selected for the structured layer will be a positive or negative for the pattern, the alphanumeric characters or the pictorial illustration, depending on the arrangement of the structured layer and of the transfer film. If the carrier film including the structured layer is removed, then a negative image of the structured layer remains as three-dimensional structuring, which means that the regions of the transfer layer in which the carrier film was free of the structured layer represents the elevated regions, while the regions of the transfer layer in which the structured layer was provided represent the - possibly differently - depressed regions.

A thickness of the carrier film of the transfer film according to the invention in the range from 12 to 100 µm has proven to be worthwhile. In the case of hot embossing, thin carrier films in the range from about 19 to 23 µm are normally used. A suitable material for the carrier film is, for example, PET, but also other plastic materials.
The three-dimensional structuring of the decorated plastic article is approximately wider by twice the thickness of the carrier film than the width of the structured layer which, together with the maximum print resolution for printing structured layers, limits the resolving power of the process. With a thickness of about 75 µm of the PET carrier film 1, a structured layer 9 applied thereto in the screen printing process and a desired depth of the three-dimensional structuring of about 25 µm, about a minimum line width of 350 µm can be applied. The spacing between two three-dimensional structures in the finally decorated plastic article should likewise be of this order of magnitude. If thinner carrier films or amorphous films, unstretched films or BOPP films (biaxially oriented polypropylene) are used, this value can be reduced further in order to increase the resolution.

In order to be used as a decorative element, the transfer film of the transfer film according to the invention comprises at least one protective layer and/or a decorative layer having a decorative effect. Such a decorative effect can be produced inter alia by an at least partly arranged, possibly mirror-reflective metal layer and/or an at least partly arranged interference layer and/or an at- least partly arranged replication layer having relief structures such as macroscopic relief structures, diffractive structures or holograms and/or an at least partly arranged colored layer and/or an at least partly arranged pigmented layer, which has fluorescent, phosphorescent, thermochromic or photochromic pigments or pigments with color changing effects that depend on the viewing angle.

If a suitable material which can easily be separated from the transfer layer is chosen for the transfer film, it is possible to dispense with an additional release layer, since one surface of the carrier film then already forms the release layer.

The hot embossing according to the second process according to the invention is preferably carried out by rolling heated rolls on the transfer film or, in the reciprocating process, by means of heated surface or shaped dies.

If the plastic article used in the hot pressing forms a film web, then it has proven worthwhile if the film web decorated with the transfer layer is processed further by means of thermoformimg or punching to form a semifinished product. The semifinished product can finally be inserted into an injection mold and sprayed with a plastic injection molding compound, at least on one of its two sides. A process of this type is normally designated an insert-molding process.

In general, it has proven worthwhile if at least the three-dimensional structuring produced in the process according to the invention has an injection molding compound sprayed over it in a subsequent injection molding process, so that specific article depth effects result.

The use of a transfer film according to the invention for the production of a plastic article which is decorated with a transfer layer and which has three-dimensional structuring in the region of the transfer layer is ideal. Such decorated plastic articles are preferably used as decorative components for the interior and exterior of a motor vehicle, for domestic appliances, radios, televisions, monitors, PCs or (mobile radio) telephones. Innumerable further possible applications are conceivable.

Figures 1 to 4 are intended to explain the invention by way of example. Thus:
- figure 1a: shows a commercially available transfer film in cross section,
- figure 1b: shows a transfer film according to the invention in cross section,
- figures 2a to 2c: show a schematic flow diagram relating to the first process according to the invention,
- figure 3: shows an injection molded article decorated in accordance with a first process according to the invention, and
- figure 4: shows a further injection molded article decorated in accordance with a second process according to the invention.

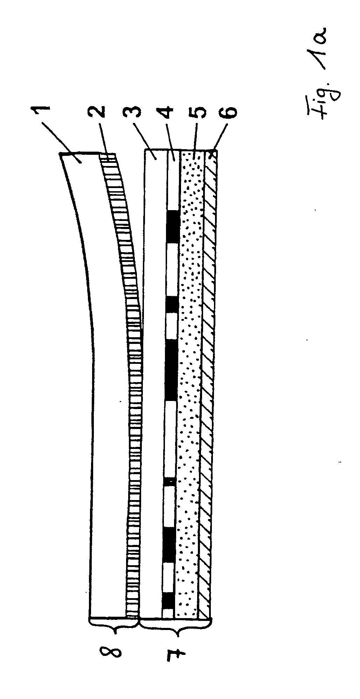

Figure 1a shows a commercially available IMD-capable (IMD = inmold decoration) transfer film in cross section, as is often used for inmold injection molding processes. The transfer film has a carrier film 1, a release layer 2, a transparent protective varnish layer 3., at least one decorative layer 4, a backing layer 5 and a primer or adhesive layer 6. The release layer 2, the transparent protective layer 3, the at least one decorative layer 4, the backing layer 5 and the primer or adhesive layer 6 can be applied to the carrier film 1 by means of a printing or coating process. The carrier film 1 and the release layer 2 form a first layer system 8 which, after the application of the transfer layer 7 formed by the transparent protective varnish layer 3, the at least one decorative layer 4, the backing layer 5 and the primer or adhesive layer 6 to a basic element to be decorated, is pulled off the transfer layer 7. This is done only at a time, since the primer or adhesive layer 6 is already mechanically connected to the base element.

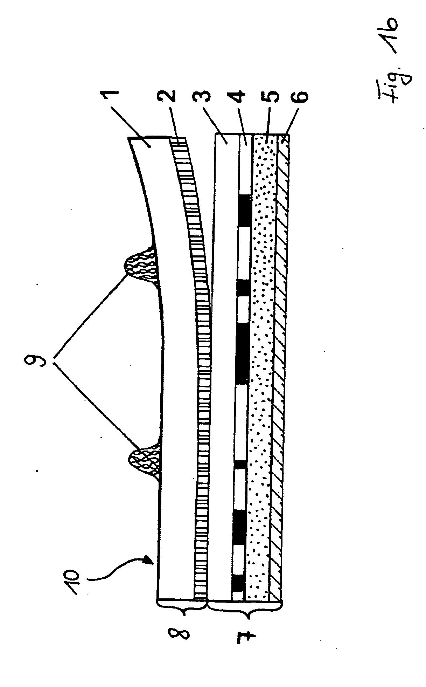

Figure 1b shows a transfer film 10 according to the invention in cross section. The transfer film 10 has, in addition to the commercially available transfer film illustrated in figure 1a, a structured layer 9, which is partially arranged on the carrier film 1 with a layer thickness of at least 20 µm. The structured layer 9 is formed from a structuring varnish with a high solids content, which has a glass transition temperature T_{g} above 200°C.

Here, the following melamine-crosslinking composition is used as a structuring varnish for forming the structured layer 9 in gravure printing technology:

| | |
|---|---|
| 8 parts | ethanol |
| 8 parts | isopropanol |
| 10 parts | toluene |
| 3 parts | methyl ethyl ketone |
| 26 parts | hexamethoxymethyl melamine |
| 30 parts | solution of a hydroxyl-functionalized polymethyl methacrylate (60%) in xylene |
| 7 parts | pigment carbon black |
| 2 parts | high molecular weight dispersant additive |
| 6 parts | p-toluene sulfonic acid |

Alternatively, the following UV-curing composition can be used as a structuring varnish for forming the structured layer 9 in a screen printing process:

| | |
|---|---|
| 25 parts | hexanedioldiacrylate HDDA |
| 35 parts | oligomer of an aliphatic urethane acrylate |
| 30 parts | acrylated oligoamine resin |
| 4 parts | photoinitiator type 1 (e.g. Irgacure^{®} 1000 from Ciba Geigy) |
| 6 parts | pigment red 122 |

Additionally, the following crosslinking structuring varnish can be used:

| | |
|---|---|
| 10 parts | ethanol |
| 8 parts | isopropanol |
| 5 parts | methyl ethyl ketone |
| 8 parts | toluene |
| 20 parts | hexamethylmethyl melamine |
| 27 parts | solution of a hydroxyl-functionalized polymethylmethacrylate (60%) in xylene |
| 15 parts | pyrogenous silicic acid |
| 7 parts | p-toluene sulfonic acid |

Furthermore, the following non crosslinked structuring varnish highly filled with an inorganic filler can be used:

| | |
|---|---|
| 30 parts | methyl ethyl ketone |
| 10 parts | butyl acetate |
| 10 parts | cyclohexane |
| 8 parts | polymethylmethacrylate (MW 60000g/mol) |
| 4 parts | polyvinylchloride mixed polymerate with a vinyl chloride content of 80 to 95% |
| 3 parts | high molecular weight dispersant additive |
| 35 parts | titanium dioxide. |

A structuring varnish according to the above compositions exhibits good adhesion to a carrier film 1 of PET and is so flexible that the deformations of the carrier film 1 possibly occurring during the processing of the transfer film are withstood without flaking off or tearing. A particularly suitable carrier film for carrying out the process according to the invention has an extension at tear in the range from about 110 to 135%, a tensile strength in the range from about 27 to 31 kpsi and a modulus of elasticity in the region of about 500 kpsi.

The structuring vanish is formed partly in the form of a pattern, a layer thickness of the cured structured layer in the range from 9 to 35 µm being produced.

The release layer 2 can also be a functional layer of the transfer layer 7 here, which permits the transfer layer 7 to be released from the carrier film 1. For example, the protective varnish layer 3 can simultaneously provide the function of the release layer and thus be used as a release layer. However, it is equally possible for a suitable carrier film 1 to provide the function of a release layer at the surface, and thus no separate release layer is required between carrier film 1 and transfer layer 7.

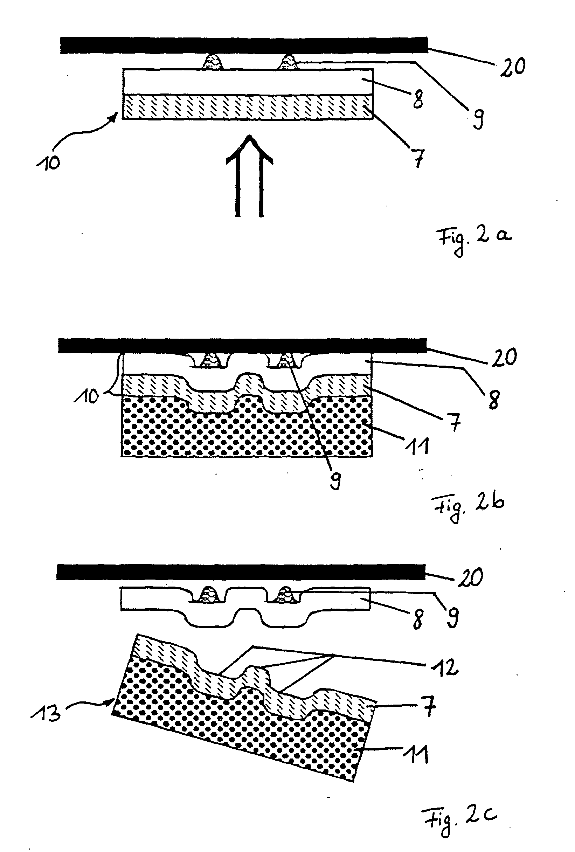

Figure 2a now shows in schematic form how the transfer film 10 is used in an inmold injection molding process. It shows schematically a detail of an injection mold 20, against whose rigid inner wall the transfer film 10 is placed, the structured layer 9 and/or carrier film 1 being in contact with the injection mold 20. After the injection mold 20 has been closed, a plastic injection molding compound, symbolized by the arrow illustrating, is injected into the injection mold 20 and the injection mold 20 is therefore filled. In the process, the transfer film 10 is pressed against the injection mold 20.

In figure 2b it can be seen that the plastic injection molding compound presses the transfer film 10 against the injection mold 20 in such a way that the regions of the transfer film 10 which have no structured layer 9 are pressed in the direction of the injection mold 20, so that these regions come into direct contact with the injection mold 20. The regions of the transfer film 10 which are provided with the structured layer 9, on the other hand, remain substantially in their position. The structured layer 9 acts as a spacer between the rigid inner wall of the injection mold 20 and the transfer film 10 after the structured layer 9 has withstood the injection pressure and the injection temperatures, which means that the structured layer 9 experiences no deformation or only very slight deformation. The transfer film 10 has a wavy course, depending on the formation of the structured layer 9. Following the curing of the plastic injection molding compound to form a first plastic material 11 or the cooling of the plastic injection molding compound, the injection mold 20 is opened and the injection molded article 13 firmly connected to the transfer layer 7 of the transfer layer 10 formed as a decorative element is removed.

Figure 2c shows the demolding step, in which the first layer system 8, consisting of the carrier film 1 and the release layer 2, including the structured layer 9, are pulled simultaneously off the transfer layer 7. The injection molded article 13 decorated with the transfer layer 7 formed as a decorative element has three-dimensional structuring 12 in the region of the decorative element, elevations being formed in the regions in which there was no structured layer 9 and valleys being firmed in the regions in which the structured layer 9 was arranged. If a carrier film 1 of PET is used with a thickness of 75 µm and a structured layer 9 of 35 µm, the profile depth produced here of the three-dimensional structuring 12 on the decorated injection molded article 13 is about 25 µm. As can be seen from figure 2c, the three-dimensional structuring 12 of the decorated injection molded article 13 is wider by about twice the thickness of the carrier film 1 than the width of the structured layer 9, which, together with the maximum extension at tear of the transfer film and the printing resolution, limits the resulting power off the method. With a thickness of about 75 µm of the carrier film 1, a structured layer 9 applied thereto in the screen printing process and a desired depth of the three-dimensional structuring of about 25 µm, about a minimum line width of 350 µm can be applied. The spacing between two three-dimensional structures in the finally decorated plastic articles should likewise be of this order of magnitude. If thinner carrier films are used, this value can be reduced further.

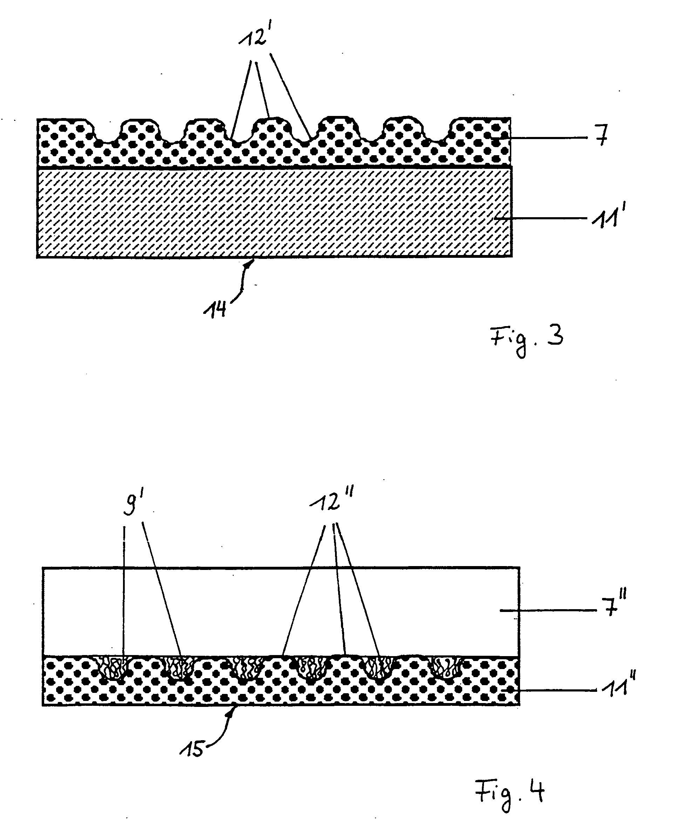

Figure 3 shows a further plastic article 14 decorated with a transfer 7 layer formed as a decorative element in a cross section, said article having a plastic element 11' formed as a film web. The visible surface of the decorated plastic article 14 has three-dimensional structuring 12'. The three-dimensional structuring 12' has been formed by a transfer film 10 according to figure 1b having been placed with its primer or adhesive layer 6 on the film web and hot embossed. By means of heated embossing rolls which have a rigid, smooth surface, the transfer film 10 is pressed onto the film web and against a rigid opposing pressure surface, a firm bond being formed between the transfer layer 7 of the transfer film 10 configured as a decorative element and the film web. The structured layer 9 of the transfer film 10 has the effect during hot embossing that the three-dimensional structuring 12' is formed, in principle as in the injection molding shown in figures 2a to 2c. Here, the three-dimensional structuring 12' is present only in the decorative element and/or the transfer layer 7; depending on the materials chosen for the embossing tool and opposing pressure surface, as already explained above, it can also continue into the film web or affect only the film web. The structuring achieved can further be covered with a transparent injection molding material in a subsequent injection molding process, for example, in order to achieve specific depth effects. If a transparent film web is used, the side of the film web opposite the decorative element can also be used as a visible surface, that is to say one facing an observer, if structuring has been produced at the interface between decorative element and film web.

Figure 4 shows a further injection molded article 15 decorated with a transfer layer 7" formed as a decorative element in cross section, said article having a transparent plastic element 11" of PMMA. The visible surface of the decorated plastic article 15 is smooth, while there is three-dimensional structuring 12" in the injection molded article 15. The three-dimensional structuring 12" was formed by a commercially available transfer film according to figure 1a has been printed with a partly arranged structured layer 9' on its primer or adhesive layer 6. The transfer film modified in this way is used in an inmold injection molding process, analogous to figures 2a to 2c. However, now the transfer film 1 rests smoothly on the injection mold and the structured layer 9' points toward the injection molding compound. After the injection mold has been closed, the plastic injection molding compound is injected into the injection mold and the injection mold is therefore filled. In the process, the transfer film is pressed against the injection mold. The transfer film including the structured layer 9' remains substantially in its position, while the plastic injection molding compound flows around the primer or adhesive layer and the structured layer 9'. Depending on the formation of the structured layer 9', the structured layer 9' effects a wavy course of the surface of the plastic element 11", which is in contact with the transfer layer 7" and the structured layer 9'. Following curing or cooling of the plastic injection molding compound 11" , the injection mold is opened and the injection molded article 15 firmly connected to the transfer layer 7" via the transfer film formed as a decorative element is removed. The first layer system, consisting of the carrier film and the release layer, is pulled off the transfer layer 7". The injection molded article 15 decorated with the transfer layer 7" formed as a decorative element has three-dimensional structuring 12" which is merely visible but cannot be detected by touch in the region of the decorative element and/or the transfer layer 7". The structured layer 9' remains in the decorated injection molded article 15, enclosed under the transfer layer 7". In order to ensure adequate adhesion between the primer or adhesive layer on the transfer layer and the plastic injection molding compound 11", attention must be paid to an adequately large area of primer or adhesive layer which is not covered by the structured layer 9' and comes directly into contact with the plastic injection molding compound 11".

By means of skillful selection of transparency and color for the plastic article to be decorated in combination with the decorations provided by the at least one decorative layer of the transfer layer, visually striking effects can be achieved. For example, colorations of the plastic articles can be detected through transparent regions in the transfer layer. Superimposition of the three-dimensional structure produced in the region of the decorative element with relief structures such as diffractive structures or holograms in the at least one decorative layer can achieve further visual effects. Three-dimensional structures which are arranged in register with at least one decoration of a decorative layer appear particularly striking.

## Claims

1. A transfer film (10) comprising a carrier film (1) having a first side and a second side, a release layer (2) being arranged on the first side of the carrier film (1) and a transfer layer (7) being arranged on the side of the release layer (2) facing away from the carrier film (1), **characterized in that** either on the second side of the carrier film (1) or on the side of the transfer film (10) opposite the second side of the carrier film (1) there is partially arranged a structured layer (9, 9') with a layer thickness of at least approximately 9 µm of a structuring varnish, whose compressive strength is substantially constant at least up to a temperature of 200°C.

2. The transfer film as claimed in claim 1, **characterized in that** the structuring varnish has a thermosetting plastic or a thermoplastic with a glass transition temperature Tg above 200°C.

3. The transfer film as claimed in claim 1 or 2, **characterized in that** the structuring layer is formed of a varnish system filled with a filler.

4. The transfer film as claimed in one of claims 1 to 3, **characterized in that** the structuring vanish is a radiation-curable, ESH-curable, epoxy-curable, isocyanate-curable or acid-curable varnish.

5. The transfer film as claimed in one of claims 1 to 4, **characterized in that** the structuring varnish has a solids content of at least 40%, preferably of 100%.

6. The transfer film as claimed in one of claims 1 to 5, **characterized in that** the structured layer (9) is arranged on the second side of the carrier film (1), and the structuring vanish is colored differently from the carrier film (1).

7. The transfer film as claimed in one of claims 1 to 5, **characterized in that** the structured layer (9') is arranged on the side of the transfer film (1) arranged opposite the second side of the carrier film (10) and **in that** the structuring varnish is colorless or colored.

8. The transfer film as claimed in one of claims 1 to 7, **characterized in that** the structured layer (9, 9') is formed in the form of a regular or irregular pattern and/or in the form of alphanumeric characters and/or in the form of pictorial illustrations on the carrier film (1)

9. The transfer film as claimed in one of claims 1 to 8, **characterized in that** the structured layer (9, 9') forms a positive or negative for the pattern, the alphanumeric characters or the pictorial illustration.

10. The transfer film as claimed in one of claims 1 to 9, **characterized in that** the carrier film (1) has a thickness in the range from 12 to 100 µm.

11. The transfer film as claimed in one of claims 1 to 8, **characterized in that** the transfer layer (7) is formed as a decorative layer and comprises at least one protective layer (3) and/or a decorative layer (4) having a decorative effect.

12. The transfer film as claimed in claim 11, **characterized in that** the decorative effect is produced by an at least partly arranged, possibly mirror-reflective metal layer and/or an at least partly arranged interference layer and/or an at least partly arranged replication layer having relief structures such as macroscopic relief structures, diffractive structures or holograms and/or an at least partly arranged colored layer and/or an at least partly arranged pigmented layer, which has fluorescent, phosphorescent, thermochromic or photochromic pigments or pigments with color changing effects that depend on the viewing angle.

13. The transfer film as claimed in claim 11 or 12, **characterized in that** the structured layer (9, 9') is arranged in register with at least one decoration of at least one decorative layer (4).

14. The transfer film as claimed in one of claims 1 to 13, **characterized in that** a surface of the carrier film (1) forms the release layer (2).

15. A process for the production of an injection molded article (13, 15) which is decorated with a transfer layer (7, 7") of a transfer film (10) and has three-dimensional structuring (12, 12") in the region of the transfer layer (7, 7"), which comprises:
- arranging the transfer film (10) as claimed in one of claims 1 to 14 in an injection mold (20) in such a way that the carrier film (1) rests on an inner wall of the injection mold (20),
- injecting a plastic injection molding compound behind the transfer film (10),
- curing the plastic injection molding compound to form a first plastic material (11),
- removing the first plastic material (11), including the transfer film (10) firmly connected thereto, from the injection mold (20), and
- pulling the carrier film (1) off the transfer layer (7) of the transfer film (10).

16. A process for the production of a thermoplastic article (14) which is decorated with a transfer layer (7) of a transfer film (10) by means of hot embossing and which has three-dimensional structuring (12') in the region of the transfer layer (7), **characterized by** the following steps:
- arranging a transfer film (10) as claimed in one of claims 1 to 14 on the plastic article (14) in such a way that the transfer film (1) faces away from the plastic article (14),
- hot embossing the transfer film (10) onto the plastic article (14), and
- pulling the carrier film (1) off the transfer layer (7) of the transfer film (10).

17. The process as claimed in claim 16, **characterized in that** the hot embossing is carried out by rolling heated rolls on the transfer film (10) or, in the reciprocating process, by means of heated surface or shaped dies.

18. The process as claimed in either of claims 16 and 17, **characterized in that** the plastic article (14) is formed as a film web, and **in that** the film web decorated with the transfer layer (7) is processed further by means of thermoformimg or punching to form a semifinished product.

19. The process as claimed in claim 18, **characterized in that** the semifinished product is inserted into an injection mold and sprayed with a plastic injection molding compound, at least on one of its two sides.

20. The process as claimed in one of claims 15 to 17, **characterized in that** at least the three-dimensional structuring (12, 12") has an injection molding compound sprayed over it in a subsequent injection molding process.

21. The use of a transfer film as claimed in one of claims 1 to 14 for the production of an injection molded article (13, 15) or plastic article (14) which is decorated with the transfer layer (7, 7') and which has three-dimensional structuring (12, 12', 12") in the region of the transfer layer (7, 7').

22. The use as claimed in claim 21, **characterized in that** the decorated injection molded article (13, 15) or plastic article (14) is a decorative component for the interior and exterior of a motor vehicle, a domestic appliance, a radio, a television, a monitor, a PC or a telephone.

## Patentansprüche

1. Übertragungsfilm (10), der einen Trägerfilm (1) mit einer ersten Seite und einer zweiten Seite, eine Ablöseschicht (2), die auf der ersten Seite des Trägerfilms (1) angeordnet ist, und eine Übertragungsschicht (7), die auf jener Seite der Ablöseschicht (2), die von dem Trägerfilm (1) weggerichtet ist, angeordnet ist, umfasst, **dadurch gekennzeichnet, dass** entweder auf der zweiten Seite des Trägerfilms (1) oder auf jener Seite des Übertragungsfilms (10), die sich gegenüber der zweiten Seite des Trägerfilms (1) befindet, teilweise eine strukturierte Schicht (9, 9') mit einer Schichtdicke von wenigstens etwa 9 µm eines strukturgebenden Lacks angeordnet ist, dessen Kompressionsfestigkeit wenigstens bis zu einer Temperatur von 200 °C im Wesentlichen konstant ist.

2. Übertragungsfilm nach Anspruch 1, **dadurch gekennzeichnet, dass** der strukturgebende Lack einen wärmeaushärtenden Kunststoff oder einen thermoplastischen Kunststoff mit einer Glasübergangstemperatur (Tg) größer als 200 °C besitzt.

3. Übertragungsfilm nach Anspruch 1 oder 2, **dadurch gekennzeichnet, dass** die strukturgebende Schicht aus einem mit einem Füllstoff gefüllten Lacksystem gebildet ist.

4. Übertragungsfilm nach einem der Ansprüche 1 bis 3, **dadurch gekennzeichnet, dass** der strukturgebende Lack ein durch Strahlung aushärtbarer, durch ESH aushärtbarer, durch Epoxid aushärtbarer, durch Isocyanat aushärtbarer oder durch Säure aushärtbarer Lack ist.

5. Übertragungsfilm nach einem der Ansprüche 1 bis 4, **dadurch gekennzeichnet, dass** der strukturgebende Lack einen Feststoffgehalt von wenigstens 40 %, vorzugsweise von 100 %, hat.

6. Übertragungsfilm nach einem der Ansprüche 1 bis 5, **dadurch gekennzeichnet, dass** die strukturgebende Schicht (9) auf der zweiten Seite des Trägerfilms (1) angeordnet ist und der strukturgebende Lack anders als der Trägerfilm (1) gefärbt ist.

7. Übertragungsfilm nach einem der Ansprüche 1 bis 5, **dadurch gekennzeichnet, dass** die strukturierte Schicht (9') auf jener Seite des Übertragungsfilms (1) angeordnet ist, die gegenüber der zweiten Seite des Trägerfilms (10) angeordnet ist, und dass der strukturgebende Lack farblos oder farbig ist.

8. Übertragungsfilm nach einem der Ansprüche 1 bis 7, **dadurch gekennzeichnet, dass** die strukturierte Schicht (9, 9') in Form eines regelmäßigen oder unregelmäßigen Musters und/oder in Form alphanumerischer Zeichen und/oder in Form bildlicher Darstellungen auf den Trägerfilm (1) gebildet ist.

9. Übertragungsfilm nach einem der Ansprüche 1 bis 8, **dadurch gekennzeichnet, dass** die strukturierte Schicht (9, 9') ein Positiv oder Negativ für das Muster, die alphanumerischen Zeichen oder die bildliche Darstellung bildet.

10. Übertragungsfilm nach einem der Ansprüche 1 bis 9, **dadurch gekennzeichnet, dass** der Trägerfilm (1) eine Dicke im Bereich von 12 bis 100 µm hat.

11. Übertragungsfilm nach einem der Ansprüche 1 bis 8, **dadurch gekennzeichnet, dass** die Übertragungsschicht (7) als eine Zierschicht ausgebildet ist und wenigstens eine Schutzschicht (3) und/oder eine Dekorschicht (4) mit einem dekorativen Effekt umfasst.

12. Übertragungsfilm nach Anspruch 11, **dadurch gekennzeichnet, dass** der dekorative Effekt durch eine wenigstens teilweise angeordnete, eventuell wie ein Spiegel reflektierende Metallschicht und/oder eine wenigstens teilweise angeordnete Interferenzschicht und/oder eine wenigstens teilweise angeordnete Replikationsschicht, die Reliefstrukturen wie etwa makroskopische Reliefstrukturen, Beugungsstrukturen oder Hologramme besitzt, und/oder eine wenigstens teilweise angeordnete gefärbte Schicht und/oder eine wenigstens teilweise angeordnete pigmentierte Schicht, die fluoreszierende, phosphoreszierende, thermochromische oder photochromische Pigmente oder Pigmente mit blickwinkelabhängigen Farbwechseleffekten besitzt, erzeugt wird.

13. Übertragungsfilm nach Anspruch 11 oder 12, **dadurch gekennzeichnet, dass** die strukturierte Schicht (9, 9') ausgerichtet auf wenigstens ein Dekor wenigstens einer Dekorschicht (4) angeordnet ist.

14. Übertragungsfilm nach einem der Ansprüche 1 bis 13, **dadurch gekennzeichnet, dass** eine Oberfläche des Trägerfilms (1) die Ablöseschicht (2) bildet.

15. Verfahren für die Herstellung eines Spritzgussgegenstands (13, 15), der mit einer Übertragungsschicht (7, 7") eines Übertragungsfilms (10) verziert ist und im Bereich der Übertragungsschicht (7, 7") eine dreidimensionale Strukturierung (12, 12") besitzt, das umfasst:
- Anordnen des Übertragungsfilms (10) nach einem der Ansprüche 1 bis 14 in einer Spritzgussform (20) in der Weise, dass der Trägerfilm (1) auf einer Innenwand der Spritzgussform (2) aufliegt,
- Einspritzen einer Kunststoffspritzgusszusammensetzung hinter den Übertragungsfilm (10),
- Aushärten der Kunststoffspritzgusszusammensetzung, um einen ersten Kunststoff (11) zu bilden,
- Entfernen des ersten Kunststoffs (11) einschließlich des Übertragungsfilms (10), der damit fest verbunden ist, aus der Spritzgussform (20), und
- Abziehen des Trägerfilms (10) von der Übertragungsschicht (7) des Übertragungsfilms (10).

16. Verfahren für die Herstellung eines thermoplastischen Gegenstands (14), der mit einer Übertragungsschicht (7) eines Übertragungsfilms (10) durch Heißprägen verziert ist und der im Bereich der Übertragungsschicht (7) eine dreidimensionale Strukturierung (12') besitzt, **gekennzeichnet durch** die folgenden Schritte:
- Anordnen eines Übertragungsfilms (10) nach einem der Ansprüche 1 bis 14 auf dem Kunststoffgegenstand (14) in der Weise, dass der Übertragungsfilm (1) von dem Kunststoffgegenstand (14) wegweist,
- Heißprägen des Übertragungsfilms (10) auf den Kunststoffgegenstand (14) und
- Abziehen des Trägerfilms (1) von der Übertragungsschicht (7) des Übertragungsfilms (10).

17. Verfahren nach Anspruch 16, **dadurch gekennzeichnet, dass** das Heißprägen durch Rollen erhitzter Walzen auf dem Übertragungsfilm (10) oder in dem hin und her gehenden Verfahren durch Stempel mit erhitzter Oberfläche oder durch geformte Stempel ausgeführt wird.

18. Verfahren nach einem der Ansprüche 16 und 17, **dadurch gekennzeichnet, dass** der Kunststoffgegenstand (14) als eine Filmbahn ausgebildet ist und dass die Filmbahn, die mit der Übertragungsschicht (7) verziert ist, ferner durch Thermoformen oder Stanzen bearbeitet wird, um ein halbfertiges Produkt zu bilden.

19. Verfahren nach Anspruch 18, **dadurch gekennzeichnet, dass** das halbfertige Produkt in eine Gießform eingesetzt wird und wenigstens auf einer seiner zwei Seiten mit einer Kunststoffspritzgusszusammensetzung besprüht wird.

20. Verfahren nach einem der Ansprüche 15 bis 17, **dadurch gekennzeichnet, dass** wenigstens die dreidimensionale Strukturierung (12, 12") eine Spritzgusszusammensetzung besitzt, die in einem nachfolgenden Spritzgussverfahren auf sie gesprüht wird.

21. Verwendung eines Übertragungsfilms nach einem der Ansprüche 1 bis 14 für die Herstellung eines Spritzgussgegenstands (13, 15) oder eines Kunststoffgegenstands (14), der mit der Übertragungsschicht (7, 7') verziert ist und in dem Bereich der Übertragungsschicht (7, 7') eine dreidimensionale Strukturierung (12, 12', 12") besitzt.

22. Verwendung nach Anspruch 21, **dadurch gekennzeichnet, dass** der verzierte Spritzgussgegenstand (13, 15) oder Kunststoffgegenstand (14) eine Zierkomponente für die Innenseite oder die Außenseite eines Kraftfahrzeugs, für ein Haushaltsgerät, ein Radio, ein Fernsehgerät, einen Monitor, einen PC oder ein Telephon ist.

## Revendications

1. Film de transfert (10) comprenant un film support (1) présentant une première face et une seconde face, une couche de séparation (2) étant agencé sur la première face du film support (1) et une couche de transfert (7) étant agencée sur la face de la couche de séparation (2) opposée au film support (1), **caractérisé en ce qu'**il est agencé partiellement, soit sur la seconde face du film support (1), soit sur la face du film de transfert (10) opposée à la seconde face du film support (1), une couche structurée (9, 9') présentant une épaisseur de couche approximativement au moins égale à 9 µm d'un vernis structurant, dont la résistance à la compression est sensiblement constante, au moins jusqu'à une température de 200°C.

2. Film de transfert selon la revendication 1, **caractérisé en ce que** le vernis structurant comporte un plastique thermodurcissable ou thermoplastique présentant une température de transition vitreuse Tg supérieure à 200°C.

3. Film de transfert selon la revendication 1 ou 2, **caractérisé en ce que** la couche structurante est formée d'un système de vernis contenant une charge.

4. Film de transfert selon l'une des revendications 1 à 3, **caractérisé en ce que** le vernis structurant est un vernis durci par rayonnement, durci par faisceau ESH, durci par époxy, durci par isocyanate ou durci par acide.

5. Film de transfert selon l'une des revendications 1 à 4, **caractérisé en ce que** le vernis structurant présente une teneur en matière solide d'au moins 40 %, de préférence, égale à 100 %.

6. Film de transfert selon l'une quelconque des revendications 1 à 5, **caractérisé en ce que** la couche structurée (9) est agencée sur la seconde face du film support (1), et le vernis structurant est coloré différemment du film support (1).

7. Film de transfert selon l'une des revendications 1 à 5, **caractérisé en ce que** la couche structurée (9') est agencée sur la face du film de transfert (1) agencée à l'opposé de la seconde face du film support (10), et **en ce que** le vernis structurant est incolore ou coloré.

8. Film de transfert selon l'une des revendications 1 à 7, **caractérisé en ce que** la couche structurée (9, 9') est réalisée sous la forme d'un motif régulier ou irrégulier et/ou sous la forme de caractères alphanumériques et/ou sous la forme de représentations picturales sur le film support (1)

9. Film de transfert selon l'une des revendications 1 à 8, **caractérisé en ce que** la couche structurée (9, 9') forme un positif ou un négatif pour le motif, les caractères alphanumériques ou la représentation picturale.

10. Film de transfert selon l'une des revendications 1 à 9, **caractérisé en ce que** le film support (1) présente une épaisseur comprise dans la plage de 12 à 100 µm.

11. Film de transfert selon l'une des revendications 1 à 8, **caractérisé en ce que** la couche de transfert (7) est formée en une couche décorative et comprend au moins une couche protectrice (3) et/ou une couche décorative (4) présentant un effet décoratif.

12. Film de transfert selon la revendication 11, **caractérisé en ce que** l'effet décoratif est produit par une couche métallique au moins partiellement agencée, éventuellement réfléchissante et/ou une couche d'interférence au moins partiellement agencée et/ou une couche de reproduction au moins partiellement agencée présentant des structures en relief telles que des structures en relief macroscopiques, des structures de diffraction ou des hologrammes et/ou une couche colorée au moins partiellement agencée et/ou une couche pigmentée au moins partiellement agencée, qui présente des pigments fluorescents, phosphorescents, thermochromes ou photochromes ou des pigments présentant des effets de changement de couleur en fonction de l'angle de visualisation.

13. Film de transfert selon la revendication 11 ou 12, **caractérisé en ce que** la couche structurée (9, 9') est agencée de manière à correspondre avec au moins une décoration d'au moins une couche décorative (4).

14. Film de transfert selon l'une des revendications 1 à 13, **caractérisé en ce qu'**une surface du film support (1) forme la couche de séparation (2).

15. Procédé de production d'un article moulé par injection (13, 15) qui est décoré avec une couche de transfert (7, 7') d'un film de transfert (10) et présente une structuration tridimensionnelle (12, 12") dans la zone de la couche de transfert (7, 7"), qui comprend :
l'agencement du film de transfert (10) selon l'une des revendications 1 à 14, dans un moule d'injection (20) de telle manière que le film support (1) repose sur une paroi interne du moule d'injection (20),
l'injection d'un composé de moulage par injection de matière plastique derrière le film de transfert (10),
le durcissement du composé de moulage par injection de matière plastique afin de former une première matière plastique (11),
l'extraction de la première matière plastique (11), comportant le film de transfert (10) fermement relié à celle-ci, du moule d'injection (20), et
la séparation du film support (1) de la couche de transfert (7) du film de transfert (10).

16. Procédé de production d'un article thermoplastique (14) qui est décoré avec une couche de transfert (7) d'un film de transfert (10) par pressage à chaud et qui présente une structuration tridimensionnelle (12') dans la zone de la couche de transfert (7), **caractérisé par** les étapes suivantes :
d'agencement d'un film de transfert (10) selon l'une des revendications 1 à 14 sur l'article en matière plastique (14) de telle manière que le film de transfert (1) soit orienté à l'opposé de l'article en matière plastique (14),
le pressage à chaud du film de transfert (10) sur l'article en matière plastique (14), et
la séparation du film support (1) de la couche de transfert (7) du film de transfert (10).

17. Procédé selon la revendication 16, **caractérisé en ce que** le pressage à chaud est mis en oeuvre par des rouleaux de laminage chauffés sur le film de transfert (10) ou, dans le procédé à mouvement alternatif, au moyen d'une surface ou de matrices façonnées chauffées.

18. Procédé selon l'une quelconque des revendications 16 et 17, **caractérisé en ce que** l'article en matière plastique (14) est formé en une bande de film, et **en ce que** la bande de film décorée avec la couche de transfert (7) est traitée ultérieurement par thermoformage ou poinçonnage afin de former un produit semi-fini.

19. Procédé selon la revendication 18, **caractérisé en ce que** le produit semi-fini est inséré dans un moule d'injection et vaporisé avec un composé de moulage par injection de matière plastique, sur au moins l'une de ses deux faces.

20. Procédé selon l'une des revendications 15 à 17, **caractérisé en ce qu'**un composé de moulage par injection est pulvérisé sur au moins la structuration tridimensionnelle (12, 12', 12") dans un procédé de moulage par injection complémentaire.

21. Utilisation d'un film de transfert selon l'une des revendications 1 à 14, afin d'assurer la production d'un article moulé par injection (13, 15) ou d'un article en matière plastique (14) qui est décoré avec la couche de transfert (7, 7') et qui comporte une structuration tridimensionnelle (12, 12', 12") dans la zone de la couche de transfert (7, 7').

22. Utilisation selon la revendication 21, **caractérisée en ce que** l'article moulé par injection et décoré (13, 15) ou l'article en matière plastique (14) est un composant décoratif pour l'intérieur et l'extérieur d'un véhicule à moteur, un appareil domestique, une radio, une télévision, un écran de contrôle, un ordinateur PC ou un téléphone.
